# EUROPÄISCHE PATENTSCHRIFT

(11) **EP 1 516 122 B1**
(45) Veröffentlichungstag und Bekanntmachung des Hinweises auf die Patenterteilung: **21.06.2006**
(21) Anmeldenummer: 03757015.7
(22) Anmeldetag: 04.06.2003
(51) Int. Cl.: F03D 11/00, F21S 8/00, F21V 11/00

(54) **GEFAHRENFEUER FÜR WINDTURBINE**
HAZARD NAVIGATION LIGHT FOR WIND TURBINES
FEU DE BALISAGE POUR TURBINE EOLIENNE

(30) Priorität: 07.06.2002 DE 10225288
(43) Veröffentlichungstag der Anmeldung: 23.03.2005
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/005812
(87) Internationale Veröffentlichungsnummer: WO 2003/104649

(56) Entgegenhaltungen:
- DE-U- 20 008 289
- DE-U- 20 114 306
- US-A- 3 858 041

## Beschreibung

Die Erfindung betrifft eine Windenergieanlage. Solche Windenergieanlagen sind seit langem bekannt. Sie bestehen regelmäßig aus mehreren Komponenten, wie einem Turm, einem darauf gelagerten Maschinenhaus, welches den Rotor der Windenergieanlage und den damit verbundenen Generator zur Energieerzeugung aufnimmt. Immer dann, wenn solche Windenergieanlagen innerhalb von Flugverkehrszonen liegen, also solchen Gebieten, die unmittelbar in relativer Nähe zu Flughäfen liegen, müssen solche Windenergieanlagen mit bestimmten Signaleinrichtungen versehen werden, damit der Luftverkehr rechtzeitig auf die Existenz der Windenergieanlage als großes Bauwerk aufmerksam gemacht wird.

Signaleinrichtungen können auch Farbanstriche der Rotorblätter (insbesondere deren Spitzen) der Windenergieanlage sein.

Allgemeine Richtlinien für die Kennzeichnung von Luftfahrthindemissen sind bekannt aus "Nachrichten für Luftfahrer", Teil 1, NfL 15/00, 27. Januar 2000.

Dort sind auch die verschiedenen Flugbefeuerungseinrichtungen erwähnt. Eine andere Flugbefeuerungseinrichtung ist bekannt aus DE-U-200 08 289, DE-U-201 14 306 und US-A-3 858 041.

Aufgabe der Erfindung ist es, die bisherigen Nachteile von Flugbefeuerungseinrichtungen zu beseitigen.

Die Aufgabe wird bei einer Windenergieanlage mit den Merkmalen nach Anspruch 1 gelöst. Vorteilhafte Weiterbildungen sind in den Unteransprüchen beschrieben.

Bei der erfindungsgemäßen Windenergieanlage ist unterhalb der blinkenden Signaleinrichtung eine Abdeckung ausgebildet, die verhindert, dass die Blinkeinrichtung in einem bestimmten Kegel (von der Flugbefeuerungseinrichtung gesehen) seitlich der Windenergieanlage vom Erdboden aus gesehen sichtbar ist. Der Kegel hat bevorzugt eine Breite von wenigstens 45°, bevorzugt aber 90 - 150° oder darüber bis über 180° (Horizontale). Eine solche Abdeckung hindert zwar den Blick auf die Flugbefeuerungseinrichtung in einem Winkel unterhalb der Windenergieanlage, der normale Flugverkehr ist jedoch nach wie vor noch in der Lage, das Licht der Flugbefeuerungseinrichtung zu erkennen.

Wenn die Abdeckung darüber hinaus eine verspiegelte Fläche ist und insbesondere auch noch parabolisch ausgebildet ist, so erscheint hierdurch das Blinken verstärkt und für den Flugverkehr leichter sichtbar.

Mit der erfindungsgemäßen Einrichtung wird die Flugbefeuerungseinrichtung auch gerade im Gebiet von Wohnanlagen nicht mehr als lästig empfunden und Lichtstörungen der Wohnbevölkerung werden vermieden.

Je nach Höhe der Flugbefeuerungseinrichtung bedeutet schon ein Winkel von 150° oder mehr, dass vom Erdboden aus gesehen in einem Abstand von 0 bis 2000 m, bevorzugt nur bis 1000 m, das Licht der Flugbefeuerungseinrichtung nicht mehr zu sehen ist. Damit wird insbesondere das Licht der Flugbefeuerungseinrichtung in angrenzenden Wohngebieten nicht mehr als Belastung empfunden.

Die Erfindung ist nachstehend an Hand eines Ausführungsbeispiels näher erläutert.

Hierin zeigen:
- Figur 1: eine Draufsicht auf eine erfindungsgemäße Windenergieanlage;
- Figur 2: eine Seitenansicht einer erfindungsgemäßen Windenergieanlage;
- Figur 3 a, b, c, d und e: verschiedene Ausführungsformen einer erfindungsgemäßen Windenergieanlage.

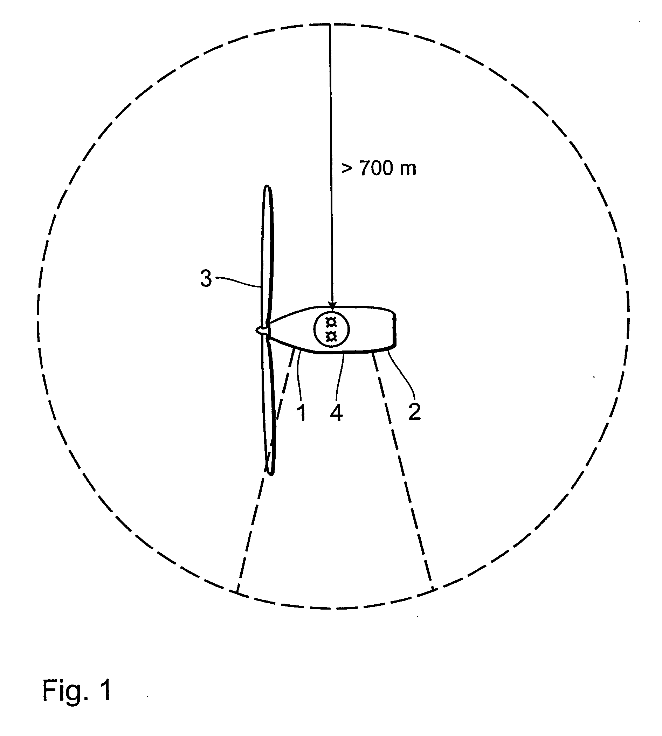

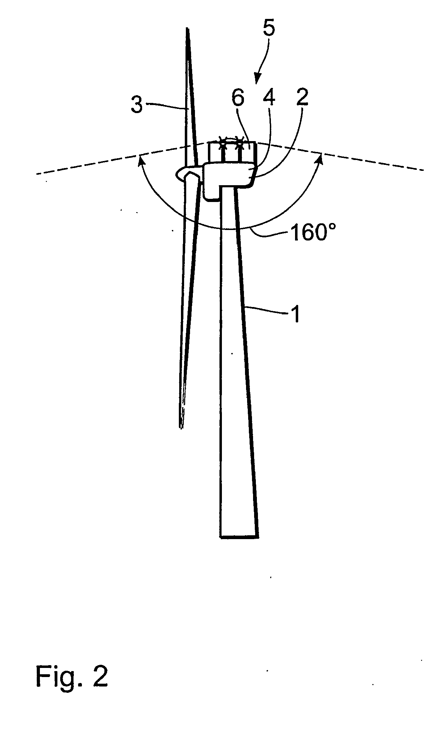

Die Fig. 1 zeigt die Draufsicht auf eine Windenergieanlage 1, bestehend aus einem Turm und einem darauf gelagerten Maschinenhaus 2 sowie dem Rotor 3 der Windenergieanlage und der Maschinenhausverkleidung (Gondel) 4. Wie in Fig. 2 zu sehen ist, ist auf der Gondel eine Flugbefeuerungseinrichtung 5 ausgebildet, die durch eine entsprechende Steuerung (nicht dargestellt) zum zeitweisen oder beständigen Blinken veranlasst wird. Unterhalb der Flugbefeuerungseinrichtung ist eine Abdeckung 6 ausgebildet, die verhindert, dass das Licht der Flugbefeuerungseinrichtung in einem Bereich seitlich der Windenergieanlage vom Erdboden sichtbar ist. Dieser Bereich kann 2000 m oder mehr seitlich der Windenergieanlage betragen (je nach Standort), wobei es regelmäßig ausreicht, wenn der Bereich, innerhalb dessen das Licht der Flugbefeuerungseinrichtung nicht zu sehen ist, etwa 1000 m (vom Erdboden aus) neben der Windenergieanlage beträgt.

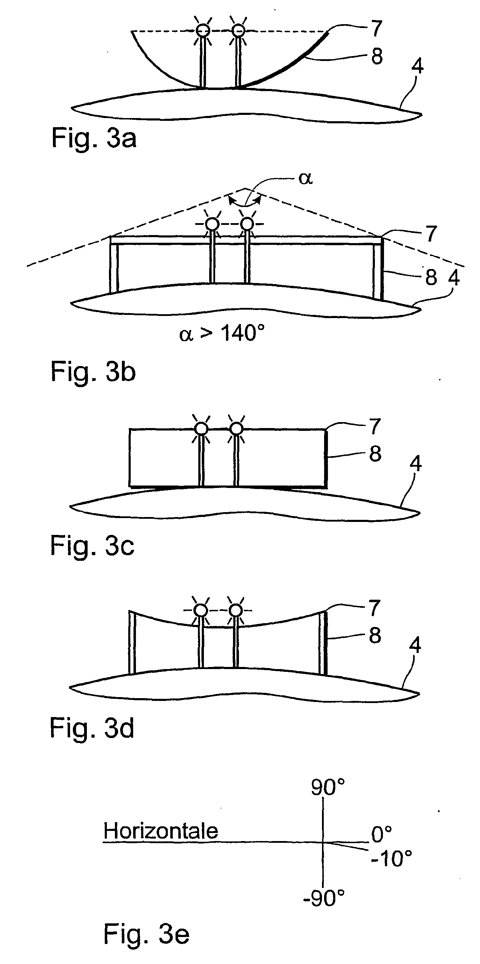

Die Form der abgedeckten Fläche kann durch eine entsprechende Form der Abdeckung bzw. Gondel vorbestimmt werden. Besteht beispielsweise die Abdeckung aus einer großen kreisförmigen Scheibe, so ist in einem kegelförmigen Bereich unterhalb der Scheibe das Licht der Flugbefeuerungseinrichtung nicht sichtbar und je nach dem Durchmesser der Scheibe ist die abgedeckte Fläche größer (Anstieg des Kegelwinkels). Wenn die Flugbefeuerungseinrichtung in einer parabolförmigen (Fig. 3a) oder kastenförmigen (Fig. 3c) Abdeckung liegt, kann der abgedeckte Winkel bis zu 180° (bezogen auf den Kegel) betragen, d.h. dann wird Licht der Flugbefeuerungseinrichtung praktisch unterhalb der Horizontalen, bezogen auf die Flugbefeuerungseinrichtung, nicht mehr sichtbar. Ein so großer Winkel wird jedoch regelmäßig kaum benötigt, da die Windenergieanlagen ohnehin oft an höheren, also exponierten Stellen stehen und die darum liegenden Gebäude deutlich unterhalb der Höhe der Flugbefeuemngseinrichtung der Windenergieanlage liegen.

Beträgt also der Abdeckungswinkel etwa 160 bis 170° (bezogen auf den Kegel), ist das Licht der Flugbefeuerungseinrichtung in einem Bereich von etwa 500 - 2000 m seitlich von der Windenergieanlage nicht mehr sichtbar, gleichzeitig ist aber das Licht der Flugbefeuerungseinrichtung für den gesamten Flugverkehr wie bisher ohne weiteres sichtbar.

Grundsätzlich ist es auch möglich, die Abdeckung der Flugbefeuerungseinrichtung so auszubilden, dass stets nur der gleiche Bereich in einem bestimmten seitlichen Bereich der Windenergieanlage abgedeckt ist. Wenn diese Abdeckung ortsfest ausgebildet ist oder motorisch nachstellbar ist (bei Drehung der Gondel um den Drehpunkt), wird also stets nur der gleiche Bereich seitlich der Windenergieanlage unabhängig vom Azimutwinkel der Windenergieanlage abgedeckt. Wie die Fig. 3a - 3d zeigen, sind verschiedene Variationen für die Abdeckung denkbar. Bestimmend für die Abdeckung ist dabei die Lage des äußeren Randes 7 der Abdeckung 8.

Je höher dieser äußere Rand gezogen wird, um so größer ist der Abdeckungswinkel und desto größer ist auch die Entfernung zur Windenergieanlage, innerhalb derer das Licht der Flugbefeuerungseinrichtung nicht mehr sichtbar ist.

Da der störende Einfluss des Lichtes der Flugbefeuerungseinrichtung jedoch mit dem Abstand zur Windenergieanlage abnimmt, wäre es regelmäßig ausreichend, wenn eine "Abschattungsentfernung" durch die Abdeckung erreicht wird, die 1500 bis 3000 m oder deutlich weniger beträgt.

## Patentansprüche

1. Windenergieanlage mit einem Turm und einem darauf aufgesetzten Maschinenhaus, welches einen Rotor und einen damit verbundenen Generator trägt, wobei die Windenergieanlage mit einer Flugbefeuerungseinrichtung ausgestattet ist, die ein weithin sichtbares Licht, bevorzugt Blinklicht erzeugt,
**dadurch gekennzeichnet, dass** die Flugbefeuerungseinrichtung mit einer Abdeckung versehen ist, die weitestgehend verhindert, dass das Licht der Flugbefeuerungseinrichtung im Bereich von 0 bis 2000 m, bevorzugt 0 bis 700 m neben der Windenergieanlage vom Erdboden aus, sichtbar ist.

2. Windenergieanlage nach Anspruch 1, **dadurch gekennzeichnet, dass** das Licht der Flugbefeuerungseinrichtung in einem Bereich von etwa 0 bis 1000 m neben der Windenergieanlage und in etwa 3 bis 10 m Höhe nicht sichtbar ist.

3. Windenergieanlage nach einem der Ansprüche 1 oder 2, **dadurch gekennzeichnet, dass** die Abdeckung eine Platte ist, welche unterhalb und/oder seitlich der Flugbefeuerungseinrichtung ausgebildet ist.

4. Windenergieanlage nach einem der vorhergehenden Ansprüche, **dadurch gekennzeichnet, dass** die Abdeckung parabolförmig ausgebildet ist, wobei die Flugbefeuerungseinrichtung innerhalb der Abdeckung liegt und die Abdeckung es erlaubt, dass das Licht der Flugbefeuerungseinrichtung im einem Winkel von -10 bis 90°, bezogen auf die Horizontale, sichtbar ist.

5. Windenergieanlage nach einem der vorhergehenden Ansprüche, **dadurch gekennzeichnet, dass** die Abdeckung so ausgebildet ist, dass nur in einem Bereichsabschnitt seitlich der Windenergieanlage unabhängig von der Azimutverstellung des Maschinenhauses der Windenergieanlage das Licht der Flugbefeuerungseinrichtung in einem Abstand von 0 bis 2000 m, bevorzugt 0 bis 1000 m oder weniger nicht oder kaum sichtbar ist.

## Claims

1. Wind power installation having a tower and a machine house disposed thereon, which machine house carries a rotor and a generator connected thereto, the wind power installation being equipped with a flight navigation light device which produces light, preferably flashing light, that is visible over a great distance,
**characterised in that** the flight navigation light device is provided with a cover that very substantially prevents the light of the flight navigation light device from being visible from the ground in the range of from 0 to 2000 m, preferably from 0 to 700 m, beside the wind power installation.

2. Wind power installation according to claim 1, **characterised in that** the light of the flight navigation light device is not visible in a range of approximately from 0 to 1000 m beside the wind power installation and at a height of approximately from 3 to 10 m.

3. Wind power installation according to either claim 1 or claim 2, **characterised in that** the cover is a plate constructed beneath and/or laterally of the flight navigation light device.

4. Wind power installation according to any one of the preceding claims, **characterised in that** the cover is parabolic in shape, the flight navigation light device lying inside the cover and the cover allowing the light of the flight navigation light device to be visible over an angle of from -10 to 90° in relation to the horizontal.

5. Wind power installation according to any one of the preceding claims, **characterised in that** the cover is so constructed that the light of the flight navigation light device is not visible or is hardly visible at a distance of from 0 to 2000 m, preferably from 0 to 1000 m or less, only in a sector to the side of the wind power installation, irrespective of the azimuth setting of the machine house.

## Revendications

1. Eolienne munie d'une tour, sur laquelle est posée une salle des turbines, laquelle porte un rotor et un générateur relié à celui-ci, l'éolienne étant équipée d'un dispositif d'avertissement aérien, lequel produit une lumière visible de loin, de préférence une lumière clignotante,
**caractérisée en ce que** le dispositif d'avertissement aérien est pourvu d'un couvercle, lequel empêche le plus possible que la lumière du dispositif d'avertissement aérien ne soit visible entre 0 et 2 000 m, de préférence entre 0 et 700 m, à côté de l'éolienne à partir du sol.

2. Eolienne selon la revendication 1, **caractérisée en ce que** la lumière du dispositif d'avertissement aérien n'est pas visible entre environ 0 et 1 000 m à côté de l'éolienne et entre environ 3 et 10 m de hauteur.

3. Eolienne selon la revendication 1 ou 2, **caractérisée en ce que** le couvercle est une plaque, laquelle est conçue en dessous et/ou sur le côté du dispositif d'avertissement aérien.

4. Eolienne selon l'une des revendications précédentes, **caractérisée en ce que** le couvercle est conçu de manière parabolique, le dispositif d'avertissement aérien se situant à l'intérieur du couvercle et celui-ci permettant à la lumière du dispositif d'avertissement aérien de ne pas être visible dans un angle de -10 à 90° par rapport à l'horizontale.

5. Eolienne selon l'une des revendications précédentes, **caractérisée en ce que** le couvercle est conçu de sorte que la lumière du dispositif d'avertissement aérien ne soit pas du tout ou presque pas visible, à une distance entre 0 à 2 000 mètres, de préférence entre 0 et 1 000 m ou moins, uniquement dans une partie de la zone à côté de l'éoliénne, indépendamment du déplacement azimutal de la salle des turbines de l'éolienne.
